# EUROPEAN PATENT APPLICATION

(11) **EP 4 822 528 A1**
(43) Date of publication of application: **14.10.2026**
(21) Application number: 25275027.8
(22) Date of filing: 07.04.2025
(51) Int. Cl.: G06F 9/48, G06F 9/50, G06F 11/07, G06F 11/30, B60W 50/02, B60W 50/029, H04L 41/0668

(54) **SERVER SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to a server system of a vehicle. The server system comprises: a plurality of data archives, each data archive of the plurality of data archives configured to store a set of applications; a plurality of compute modules for executing applications from the set of applications; and a plurality of application managers, each compute module of the plurality of compute modules comprising an application manager of the plurality of application managers, each application manager for managing execution of at least some of the applications of the set of applications between the plurality of compute modules, wherein the plurality of compute modules are physically separated from each other on the vehicle.

## Description

### FIELD

The subject-matter of the present disclosure relates to a server system, for example, a server system on a vehicle.

### BACKGROUND

All uncrewed and self-driving vehicles have large requirements for computer processing to operate; from analysing the world around them, to generating actions to controlling the various actuators on the platform. A lot of this processing is essential to the operation of the vehicle and should the computers be damaged then this may render the vehicle inoperable. In many applications the answer to this is to use high integrity computer modules. These modules operate with very high reliability and can be trusted to not break down or degrade (within their design tolerances) as long as they are kept within their operating parameters. These modules tend to be very expensive due to the design, manufacture and certification requirements driven by the high-integrity nature. This solution will likely not be suitable for some classes of uncrewed and autonomous vehicle which operate in extreme environments or are expected to continue to function after sustaining damage and are expected to be atritable (i.e. cheap). For example, an uncrewed ground vehicle (UGV) may be shot at by adversarial forces (if used in a military context) or by struck by falling objects (if used in extreme civilian scenarios such as mining, forestry, or disaster relief). In these contexts, the requirements on the compute are likely to be:
- Low cost;
- Highly tolerant to damage; and
- Graceful degradation (as damage is sustained the vehicle has a gradual reduction in capabilities or performance rather than a sudden cessation)

Therefore, in these scenarios high-integrity compute is unlikely to be sufficient as it does not meet any of these requirements. A similar problem is encountered in "Infrastructure as a service" products used in IT infrastructures where computer processing is always required but some servers may need to be taken offline for servicing and maintenance.

It is an aim of the present invention to address such problems and improve on the prior art.

### SUMMARY

According to an aspect of the present disclosure, there is provided a server system of a vehicle comprising: a plurality of data archives, each data archive of the plurality of data archives configured to store a set of applications; a plurality of compute modules for executing applications from the set of applications; and a plurality of application managers, each compute module of the plurality of compute modules comprising an application manager of the plurality of application managers, each application manager for managing execution of at least some of the applications of the set of applications between the plurality of compute modules, wherein the plurality of compute modules are physically separated from each other on the vehicle.

By physically separating the compute modules, and the application managers being part of, and thus physically located with, the compute modules, if one application manager sustains damage, the other compute modules and thus application modules are unlikely to have sustained the same damage. Therefore, the applications can be redistributed amongst the remaining compute modules. This is in contrast to prior approaches, for example, where an application manager is remote to the compute modules, and/or the compute modules are physically located together. This one source of damage can completely destroy the entire server system.

In an embodiment, the plurality of application managers has a predetermined seniority hierarchy, wherein each application manager is configured to: emit a heartbeat periodically; receiving heartbeats from at least one other application manager; and identify if any monitored heart beats are received from an application manager with a higher seniority.

In an embodiment, each application manager is further configured to: be passive when a heartbeat is received from an application manager with a higher seniority; and allocate the at least some of the applications for execution between the compute modules when no heartbeat is received from an application manager with a higher seniority.

In an embodiment, each application manager being configured to allocate the at least some of the applications for execution between the compute modules comprises each application manager being configured to: allocate the at least some of the applications for execution based on performance requirements of the respective applications.

In an embodiment, performance requirements are selected from a list of performance requirements including: speed, latency, and power.

In an embodiment, each application manager is configured to: be passive when a heartbeat is received from an application manager with a higher seniority; and when no heartbeat is received from an application manager with a higher seniority: check resources of each compute module, rank the at least some of the applications by criticality, and execute the ranked applications in order from highest criticality to lowest criticality on the compute modules with available resources.

In an embodiment, the server system further comprises a communication network connecting each of the compute modules and each of the data archives.

In an embodiment, the communication network is a mesh network.

In an embodiment, the set of applications includes native applications and third-party applications.

In an embodiment, the set of applications includes critical applications and non-critical applications.

According to another aspect of the present disclosure, there is provided an uncrewed vehicle comprising the server system of any preceding aspect or embodiment.

### BRIEF DESCRIPTION OF DRAWINGS

The subject-matter of the present disclosure is best described with reference to the accompanying figures, in which:
Figure 1 shows a block diagram illustrating a vehicle including a server system, according to at least one embodiment;
Figure 2 shows a block diagram of the sever system from Figure 1, according to at least one embodiment;
Figure 3 shows a matrix chart representing different applications executed on the server system, according to at least one embodiment;
Figure 4 shows a flow chart illustrating a method of operating the server system from Figure 2; and
Figure 5 shows a similar view to Figure 2 of the server system where one compute module is inactive, according to at least one embodiment.

### DESCRIPTION OF EMBODIMENTS

Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

The embodiments described herein may be embodied as sets of instructions stored as electronic data in one or more storage media. Specifically, the instructions may be provided on a transitory or non-transitory computer-readable media. When executed by the processor, the processor is configured to perform the various methods described in the following embodiments. In this way, the methods may be computer-implemented methods. In particular, the processor and a storage including the instructions may be incorporated into a vehicle.

Whilst the following embodiments provide specific illustrative examples, those illustrative examples should not be taken as limiting, and the scope of protection is defined by the claims. Features from specific embodiments may be used in combination with features from other embodiments without extending the subject-matter beyond the content of the present disclosure.

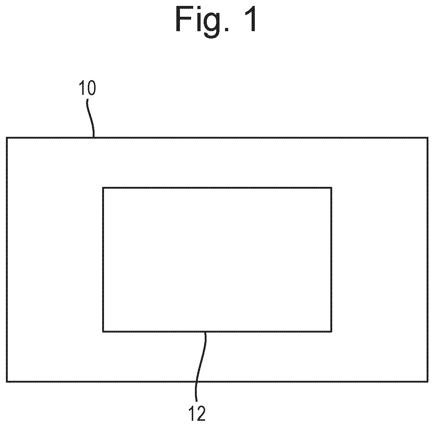

With reference to Figure 1, a vehicle 10 includes a server system 12. The vehicle may be a military vehicle. The vehicle may be a land vehicle, a water vehicle, or an air vehicle. For example, the vehicle may be a tank, a fighter plane, a helicopter, a warship, or the like. The vehicle may be uncrewed in that no personnel are onboard when the vehicle is in operation. The vehicle may be remotely operated or may be autonomous.

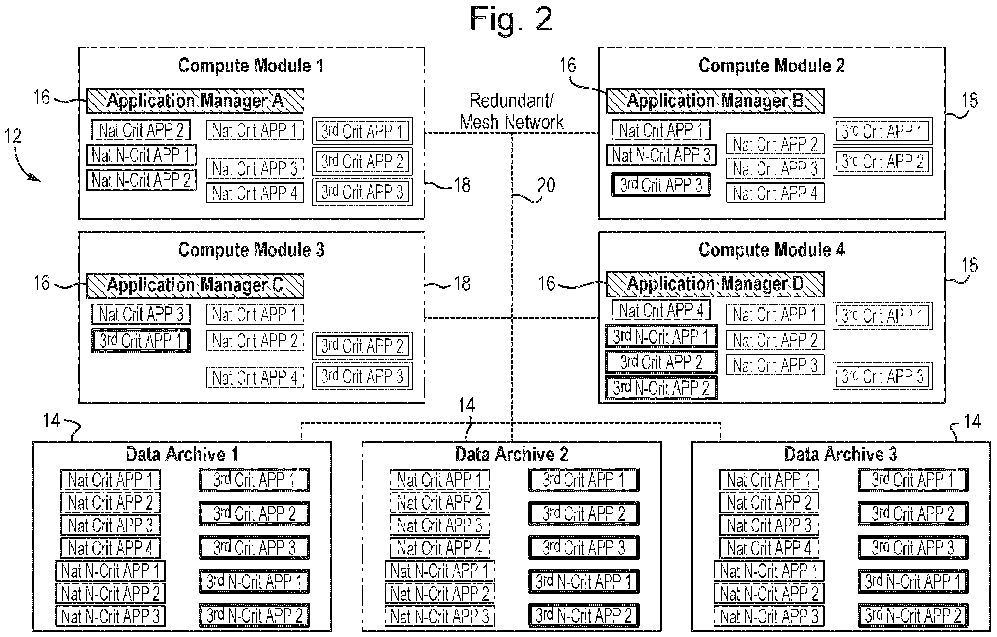

With reference to Figure 2, the server system 12 includes a plurality of data archives 14, each data archive of the plurality of data archives configured to store a set of applications. The server system 12 also includes a plurality of compute modules 18 for executing applications from the set of applications. The plurality of compute modules being physically separate from each other on the vehicle 10. These compute modules should not be co-located on the vehicle but should be dispersed as widely as possible. For example, one could be placed in each corner of a box mounting platform of the vehicle. Along with the compute modules, the several data storage modules, or data archives, are not co-located with each other but distributed across the vehicle. In other words, the data archives are separated from one another on the vehicle. The compute and storage modules should then be connected via a communication network 20 connecting each of the compute modules and each of the data archives. The communication network may be a high speed network which itself has a level of redundancy (e.g. a mesh network, or more specifically a mesh Ethernet network).

The set of applications may be the same on each data archive. In other words, each data archive may store the same applications.

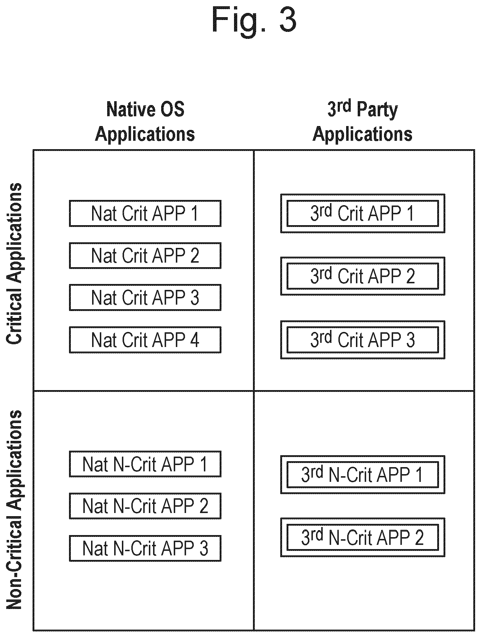

With reference to Figure 3, the set of applications includes critical applications and non-critical applications. The set of applications includes native applications and third-party applications.

The applications that need to be run to control the vehicle are labelled by whether they are critical to the operation of the vehicle and whether they have been developed within the compute's operating system or as a 3rd party application (i.e. to run on a different operating system). This gives 4 possible classification of applications:
- An application native to the operating system that is critical to the vehicle operation. These are the native critical applications.
- An application native to the operating system that is not critical to the vehicle operation. These are the native non-critical applications.
- An 3rd party application that is critical to the vehicle operation. These are the 3^{rd} party critical applications.
- An 3rd party application that is not critical to the vehicle operation. These are the 3^{rd} party non-critical applications.

In this way, there may be a plurality of native critical applications, a plurality of native non-critical applications, a plurality of third-party critical applications, and a plurality of third-party non-critical applications. For example, there may be four native critical applications, Nat Crit APP 1, Nat Crit APP 2, Nat Crit APP 3, and Nat Crit APP 4. There may be three native non-critical applications, Nat N-Crit APP 1, Nat N-Crit APP 2, and Nat N-Crit APP 3. There may be three third party critical applications, 3^{rd} Crit APP 1, 3^{rd} Crit APP 2, and 3^{rd} Crit APP 3. There may be two 3^{rd} party non-critical applications, 3^{rd} N-Crit APP 1 and 2rd N-Crit APP 2.

Native applications can be deployed to compute modules as is whereas 3rd party applications will need to be containerised before deployment.

The different applications from the set of applications may be stored on different compute modules. Some may remain dormant, or in sleep mode, and others may be active for execution. Any applications stored on a compute module may be executed by the application manager.

With further reference to Figure 2, the server system comprises a plurality of application managers 16. Each compute module of the plurality of compute modules comprises an application manager of the plurality of application managers. Each application manager is suitable for managing execution of at least some of the applications of the set of applications between the plurality of compute modules. Each application manager may also be suitable for managing storage of at least some of the application of the set of applications between the plurality of compute modules. In this way, on each compute module is installed an application manager instantiation and a copy of all critical applications (although most will not be run but will be left "dormant"). A copy of all applications will be stored in all data archives.

The plurality of application managers has a predetermined seniority hierarchy. In other words, at deployment the instantiations of the application manager will be given a ranking in hierarchy of managers. Only one application may manage the applications across the server system, e.g. which compute module executes which applications. The seniority dictates which application manager performs this task. For example, the most senior application manager performs this task, while the others remain dormant, or passive. The hierarchy may be serial, or linear, e.g. no application manager has the same seniority as another.

In operation, each application manager is configured to: emit a heartbeat periodically; receive heartbeats from at least one other application manager; and identify if any monitored heart beats are received from an application manager with a higher seniority.

Each application manager is further configured to: be passive when a heartbeat is received from an application manager with a higher seniority; and allocate the at least some of the applications for execution between the compute modules when no heartbeat is received from an application manager with a higher seniority. In other words, when no heartbeat is received from a higher seniority application manager, the present application manager is assumed to have the highest seniority and so manages the applications across the compute modules.

Each application manager being configured to allocate the at least some of the applications for execution between the compute modules comprises each application manager being configured to: allocate the at least some of the applications for execution based on performance requirements of the respective applications. The performance requirements are selected from a list of performance requirements including: speed, latency, and power. In this way, performance across all compute modules is optimal.

Each application manager is configured to: be passive when a heartbeat is received from an application manager with a higher seniority; and when no heartbeat is received from an application manager with a higher seniority: check resources and status of each compute module, rank the at least some of the applications by criticality, and execute the ranked applications in order from highest criticality to lowest criticality on the compute modules with available resources. In this way, not all applications will be executed in an event that the available compute modules do not combine to form sufficient resources to execute all applications. The lowest criticality applications in this sense may not be executed or reduced resources can be allocated to an application that needs to run so that it can be executed at lower performance. This will ensure graceful degradation rather than complete failure should there be insufficient resources to execute all critical applications. Similarly, non-critical applications may be given reduced resources once all critical application are being executed so that all applications run even if some are at a reduced performance. In this way, the application manager being configured to execute the ranked applications in order from highest criticality to lowest criticality on the compute modules with available resources comprises the application manager being configured to execute the ranked applications using resources scaled according to the ranking of the applications. The term scaled may mean proportional, such that higher ranked applications receive proportionally more resources than lower ranked applications. To achieve this, a weighting may be applied to each of the applications according to its rank. The weight may be used to weight the recourses used to execute the application.

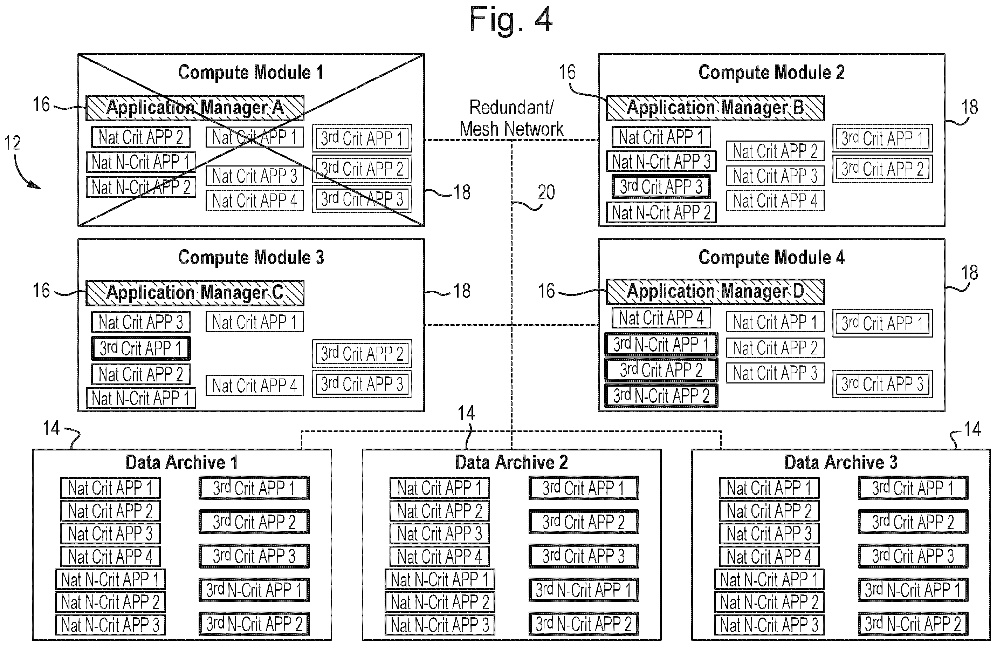

With reference to Figure 4, this method may be similarly described as follows.

The method may include checking 200 heartbeats from other application manager instantiations. All of the application manager instantiations send out a "heartbeat" signal. If an instantiation receives a heartbeat signal from a higher ranked instantiation, then it does nothing for now (remains passive) and thus the highest ranked instantiation will be the only one that runs beyond the heartbeat function; hereby referred to as the lead instantiation.

In other words, the method includes checking 202 is a heartbeat is received from an instantiation with a higher hierarchical position. If yes, the instantiation of the application manager remains passive. If no, the method progresses to checking 204 a status of all addressable compute. In other words, the lead instantiation reads the status of all addressable compute modules.

The lead instantiation then allocates applications across all addressable compute modules to give optimum performance (speed, latency, power, etc.). In other words, the method also includes allocating, or re-allocating, 206 applications across all available compute modules.

Whilst the lead instantiation keeps running then it manages the application load across all computes, monitoring the situation and reallocating as required, allocating new applications as appropriate. In other words, the lead instantiation keeps managing execution of at least some of the applications between the plurality of compute modules.

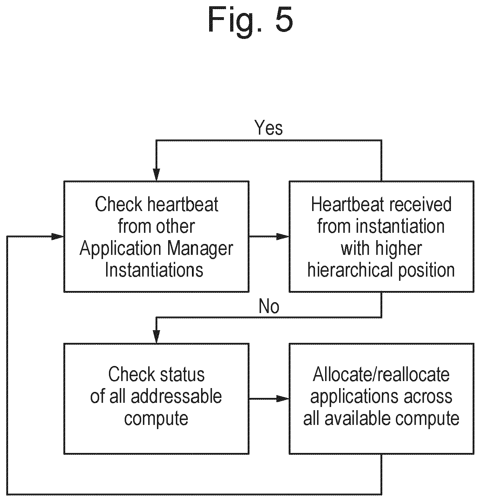

With reference to Figure 5, if damage is sustained so as to render one compute module 18_1 inoperable/unaddressable then the process is broadly replicated.

In other words, the method includes each application manager monitoring heartbeats, where the heartbeat will identify the highest ranked remaining application manager instantiation with a new lead instantiation potentially being identified.

The lead instantiation reads the status of all addressable compute modules.

The lead instantiation reads which applications are not running that should be.

The lead instantiation then allocates applications across all addressable compute modules. To achieve this, critical applications are brought out of sleep mode (as they have already been loaded to all compute modules), and non-critical applications are loaded from a suitable addressable data module.

As more damage is sustained the process repeats. If too much damage is sustained the lead instantiation may begin to reduce the resource available to, initially non-critical applications, and then to all applications. By this way the vehicle may run slower as damage is sustained but it will not be rendered inoperable until all compute modules have been damaged/destroyed or the connecting network has been destroyed.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A server system of a vehicle comprising:
a plurality of data archives, each data archive of the plurality of data archives configured to store a set of applications;
a plurality of compute modules for executing applications from the set of applications; and
a plurality of application managers, each compute module of the plurality of compute modules comprising an application manager of the plurality of application managers, each application manager for managing execution of at least some of the applications of the set of applications between the plurality of compute modules,
wherein the plurality of compute modules are physically separated from each other on the vehicle.

2. The server system of Claim 1, wherein the plurality of application managers has a predetermined seniority hierarchy, wherein each application manager is configured to:
emit a heartbeat periodically;
receive heartbeats from at least one other application manager; and
identify if any monitored heart beats are received from an application manager with a higher seniority.

3. The server system of Claim 2, wherein each application manager is further configured to:
be passive when a heartbeat is received from an application manager with a higher seniority; and
allocate the at least some of the applications for execution between the compute modules when no heartbeat is received from an application manager with a higher seniority.

4. The server system of Claim 3, wherein each application manager being configured to allocate the at least some of the applications for execution between the compute modules comprises each application manager being configured to:
allocate the at least some of the applications for execution based on performance requirements of the respective applications.

5. The server system of Claim 4, wherein the performance requirements are selected from a list of performance requirements including: speed, latency, and power.

6. The server system of any of Claims 2 to 5, wherein each application manager is configured to:
be passive when a heartbeat is received from an application manager with a higher seniority; and
when no heartbeat is received from an application manager with a higher seniority:
check resources of each compute module,
rank the at least some of the applications by criticality, and
execute the ranked applications in order from highest criticality to lowest criticality on the compute modules with available resources.

7. The server system of Claim 6, wherein the application manager being configured to execute the ranked applications in order from highest criticality to lowest criticality on the compute modules with available resources comprises the application manager being configured to execute the ranked applications using resources scaled according to the ranking of the applications.

8. The server system of any preceding claim, further comprising a communication network connecting each of the compute modules and each of the data archives.

9. The server system of Claim 8, wherein the communication network is a mesh network.

10. The server system of any preceding claim, wherein the set of applications includes native applications and third-party applications.

11. The server system of any preceding claim, wherein the set of applications includes critical applications and non-critical applications.

12. An uncrewed vehicle comprising the server system of any preceding claim.
